# EUROPEAN PATENT SPECIFICATION

(11) **EP 0 636 435 B1**
(45) Date of publication and mention of the grant of the patent: **23.12.1998**
(21) Application number: 94401496.8
(22) Date of filing: 30.06.1994
(51) Int. Cl.: B21D 43/10, B21D 5/02, B25J 5/00

(54) **Work loading and unloading device for bending machines**
Vorrichtung zur Einlagerung und Entnahme für eine Biegepresse
Dispositif pour placer et retirer des pièces dans une presse de pliage

(30) Priority: 30.06.1993 JP 162749/93
(43) Date of publication of application: 01.02.1995
(73) Proprietor: AMADA METRECS COMPANY, LIMITED, Kanagawa 259-11 (JP)
(72) Inventor: Takeshita, Kazunori, Isehara-shi, Kanagawa (JP)
(74) Representative: Hasenrader, Hubert

(56) References cited:
- EP-A- 0 213 667
- EP-A- 0 354 559
- EP-A- 0 532 372
- DE-A- 3 407 445
- FR-A- 2 584 633
- US-A- 4 150 936
- US-A- 5 187 958
- PATENT ABSTRACTS OF JAPAN vol. 13, no. 60 (M-796) 10 February 1989 & JP-A-63 264 290 (AMADA)
- PATENT ABSTRACTS OF JAPAN vol. 15, no. 318 (M-1146) 14 August 1991 & JP-A-03 118 921 (KOMATSU)

## Description

### BACKGROUND OF THE INVENTION

### Field of the Invention

The present invention relates to a work loading and unloading device for a bending machine according to the preamble of claim 1 (see for example JP-A-3118921), and more specifically to a device for loading work to a bending machine such as a press brake and further for unloading the bent work from the same bending machine.

### Description of the Related Art

In the conventional work loading and unloading device for loading work to a bending machine such as a press brake and further for unloading out the bent work from the bending machine, a robot of 6-axis control is fixedly arranged on the front side of a single bending machine, independently. In addition, the upper and lower hands attached to a work hand of the robot are openable to both sides.

In the above-mentioned conventional device, however, the cost of the robot itself is high and a long program preparation and teaching time (i.e., the setup time) are needed. In addition, since the conventional work loading and unloading device must be arranged for each bending machine separately, it is troublesome to use the same work loading and unloading device for the other bending machines.

In the case where a small-sized work is clamped by the work hand and brought into contact with the back gage the work hand interferes with a die, before the work is brought into contact with the back gage. Further, when the already bent work is to be clamped by the work hand, it is possible that the latter interferes with the die and that consequently the moving stroke of the work hand must be reduced. Another drawback of the known device consists in the fact that the double-work taking-up must be detected on the work loading device side, so that it takes a relatively long time to detect the double work taking-up.

### SUMMARY OF THE INVENTION

With these problems in mind, therefore, it is the primary object of the present invention to provide a work loading and unloading device for a bending machine, which is low in cost and short in time required for program preparation and teaching time (setup time), and which can be arranged and located at needs in front of a desired bending machine. Further, the work loading and unloading device should be provided with a work hand which can clamp even small works without interfering with the die and further can detect easily double-work taking-up.

The above-mentioned primary object is achieved by a work loading and unloading device for a bending machine as defined in claim 1.

According to a preferred embodiment, a plurality of centering heads are disposed below and at roughly a middle portion of the base and a plurality of centering blocks are installed on the floor in front of the bending machine and provided with centering holes into which said centering heads are engageable so as to locate the work loading and unloading device in front of the bending machine.

Further, the work hand may comprise : a work hand body ; an upper hand attached to said work hand body ; a lower or upper hand fixedly attached to said work hand body ; a work push member disposed at least on one of said upper and lower hands, for pushing the work mounted on a die against a back gage of the bending machine ; and a spring for urging said work push member against the work.

The work hand may further comprise : an upper or lower hand pivotally attached to the work hand body so as to be pivotal relative to said lower or upper hand.

The work hand body of the work loading and unloading device preferably comprises also a double-work take-up detecting device attached to said work hand body, for detecting whether two works are clamped simultaneously between said lower and upper hands, said detecting device cooperating with the pivotable hand thereof.

More precisely, the 5-axis robot preferably comprises :
a fixed arm base ;
a first arm member rotatable around a vertical axis and rotatably supported by said fixed arm base ;
a second arm member pivotally supported at the top end of said first arm member around a first horizontal axis ;
a third arm member pivotally supported at one end of said second arm member around a second horizontal axis ;
a fourth arm member pivotally supported at one end of said third arm member around a third horizontal axis ;
a fifth arm member pivotally supported by said fourth arm member around
a fourth axis perpendicular to said third axis ; and
the work hand removably attached to an end of said fifth arm member.

The single-work taking-up device preferably comprises :
a device base ;
a vertical cylinder having a vertical piston rod ;
a horizontal suction arm member having one of its ends attached to the top of said vertical piston rod ; and
a plurality of suction pads provided on the lower face of said suction arm member for sucking up only a single work from stacked works.

Further, the double-work take-up detecting device preferably comprises :
a hollow cylindrical member attached to a work hand body of the work hand ;
a contact member disposed within and insulated from said hollow cylindrical member ;
a movable piston member disposed within said hollow cylindrical member (91) on one side of and remote from said contact member ;
a spring disposed within said hollow cylindrical member so as to urge said movable piston member outward from said hollow cylindrical member ; and
an adjusting bolt having a head and a shaft loosely passed through said contact member and fitted to said movable piston member ; said head cooperating with said contact member so as to constitute a detection switch operated by an arm member of the pivotable hand of said work hand.

In the work loading and unloading device for a bending machine according to the present invention, the 5-axis control robot and the single-work taking-up device can be arranged in front of a bending machine, so that after a single work has been taken from stacked works by the single-work taking-up device, the taken-up work can be clamped by the work hand provided at an end of the robot and then supplied to the bending machine. After the bending operation, the bent work is clamped again by the work hand of the robot and then conveyed out of the bending machine.

Thanks to the fact that the 5-axis control robot and the single-work taking-up device are both arranged on the base to forn a unit, it is possible to take up a single work from stacked works and then supply the taken-up work to the bending machine, and further to convey out the bent work from the bending machine in successive automatic steps.

Further, since the wheels and the centering heads (engageable with the centering blocks fixed on the floor in front of the bending machine) are provided on the base, it is possible to position the 5-axis control robot and the single-work taking-up device freely at any desired place in front of a bending machine only if need would be.

Further, since the work push member is provided for at last one of the upper and lower hands of the work hand, it is possible to securely push even a small-sized work against the back gage of the bending machine without interference with the die or the punch.

Further, since the work hand body is provided with the double-work take-up detecting device, it is possible to prevent two works from being taken out of stacked works simultaneously and from being supplied to the die or the punch.

Further, since at least one of the upper and lower hands of the work hand is rigidly fixed to the work hand body and the other thereof is pivotally mounted on the same work hand body, it is possible to clamp even a small-sized work, without interference with the die or the punch.

### BRIEF DESCRIPTION OF THE DRAWINGS

Fig 1 : is a front view showing an embodiment of the work loading and unloading device for a bending machine according to the present invention ;
Fig 2 : is a plane view showing the same work loading and unloading device shown in Fig 1 ;
Fig 3 : is a front view showing an embodiment of the work hand of the work loading and unloading device according to the present invention ;
Fig 4 : is a cross-sectional view taken along the lines IV-IV shown in Fig 3 ;
Figs 5A to 5C are illustrations for assistance in explaining the function of the work hand when work is pushed against a back gage of a bending machine by a work push member provided on the work hand ;
   - Fig 6 : is a front view showing another embodiment of the work hand according to the present invention ; and,
   - Fig 7 : a front view showing still another embodiment of the work hand according to the present invention.

### DETAILED DESCRIPTION OF THE EMBODIMENTS

An embodiment of the present invention will be described hereinbelow with reference to the attached drawings.

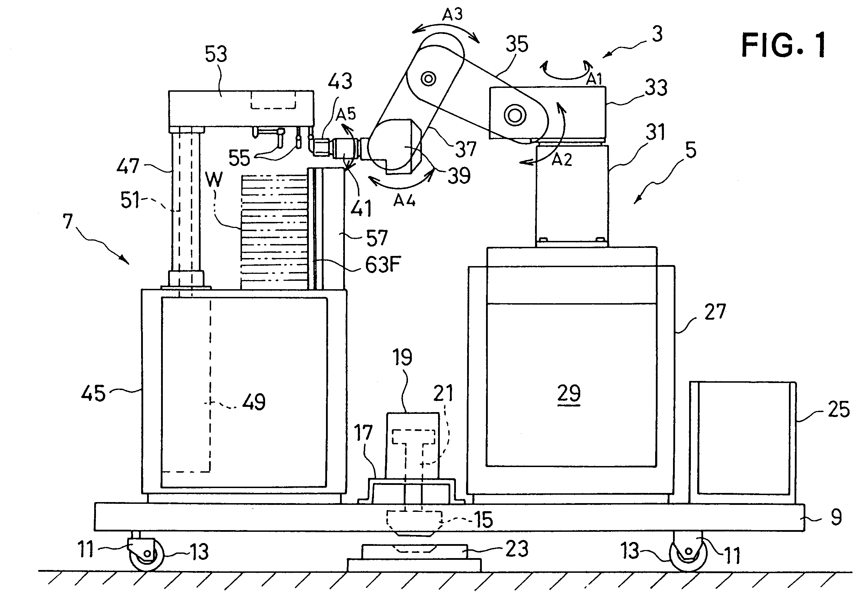

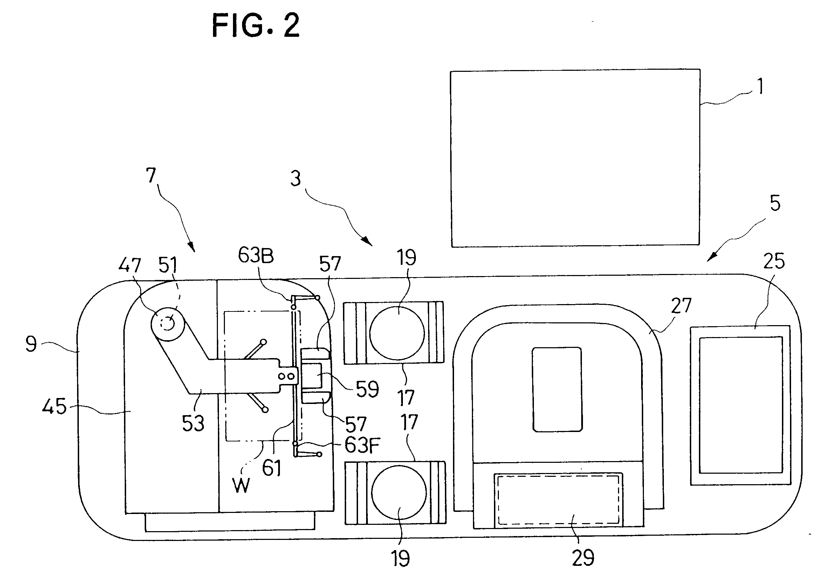

With reference to Figs 1 and 2, in front of a press brake (as a example of a bending machine), a work loading and unloading device 3 is arranged. This work loading and unloading device 3 is mainly composed of a 5-axis robot 5 and a single-work taking-up device 7. The robot 5 and the single-work taking-up device 7 are mounted on a rectangular base 9 so as to form a unit.

The base 9 is provided with a plurality of rotatable wheels 13 via brackets 11, respectively on the front and rear and right and left sides of the lower portion of the base 9, the brackets 11 at the front or the rear side being pivotally supported by vertical axles fixed onto the base 9. Further, the base 3 is provided with a plurality of centering heads 15 at roughly the middle portion of the base 9. In more detail, a support bracket 17 is attached to roughly the middle portion of the base 9, and a hydraulic cylinder 19 is mounted on the support bracket 17. A piston rod 21 fitted into this hydraulic cylinder 19 is formed integral with a corresponding centering head 15 at the lower end of the piston rod 21.

On the floor of the front side of the press brake 1 and below base 9 (see also Fig. 2), are disposed a plurality of centering blocks 23 provided with centering holes into which can be engaged or from which can be disengaged the centering heads 15 mounted onto the base 9.

Owing to the construction as described above, the work loading and unloading device 3 provided with the base 9 on which the robot 5 and the single-work taking-up device 7 are arranged, can be moved from a given position to the front side of the press brake 1. Further, for a precise positioning of the device 3, the hydraulic cylinder 19 is actuated to move the piston rod 21 downward, so that the centering heads 15 are engaged into the holes of the corresponding centering blocks 23.

Further, when the work loading and unloading device 3 is required to be used for another press brake 1, the hydraulic cylinder 19 is actuated to move the piston rod 21 upward, so that all the centering heads 15 are disengaged from the centering blocks 23. Accordingly, the work loading and unloading device 3 can be moved to any required place. Further, a product accommodating box 25 for accommodating the bent works (products) is mounted on the base 9 close to the robot 5 and on the opposite side with respect to the single work taking-up device 7.

The robot 5 is provided with a robot body 27 mounted on the base 9. On the front surface of the robot body 27, a console panel 29 is attached. An arm base 31 is fixed on the top of the robot body 27; an end of a first horizontal arm member 33 is mounted onto the top of the arm base 31 so as to be rotatable around a vertical (A1) axis; an end of a second arm member 35 is pivotally supported by the other end of the first arm member 33 around a horizontal (A2) axis; an end of a third arm member 37 is pivotally supported by the other end of the second arm member 35 around a second horizontal (A3) axis which is parallel to the first horizontal axis (A2); a fourth arm member 39 is pivotally supported on the other end of the third arm member 37 around a third horizontal (A4) axis parallel to the first and second horizontal axis (A2, A3); an end of a robot hand 41 is pivotally supported by the fourth arm member 39 around a fourth (A5) axis which is perpendicular to said third horizontal axis (A3); and a work hand 43 is removably attached to the other end of the robot hand 41. The driving mechanisms of these arm members 33, 35, 37 and 39 and these hands 41 and 43 are all well known, so that any detailed description thereof can be omitted.

Since the respective arm members and the hands are all controllably manipulated, it is possible to control the motion of the work hand 43 so that the work W can be clamped or unclamped by the work hand 43 in accordance with the 5-axis control, whenever the console panel 29 of robot 5 is operated.

The single-work taking-up device 7 is provided with a device body 45 mounted on base 9 and comprising a vertically extending guide post 47. Further, a vertical cylinder 49 is provided within the device body 45. A vertically movable piston rod 51 fitted into this vertical cylinder 49 is guided along the guide post 47. The upper end of the piston rod 51 is fixed to an end of a horizontally extending suction arm member 53, the other end part of which is provided with a plurality of suction pads 55.

Since the horizontal suction arm member 53 is moved up and down by the piston rod 51 under guidance of the guide post 47, the suction pads 55 are also moved up and down when the vertically movable piston in cylinder 49 is actuated.

On the right side of the device body 45 in Fig. 2, two front stoppers 57 for detecting the horizontal positions of the work ends of stacked works W are provided so as to be opposed to each other. Further, a magnet separator 59 for separating the work ends is interposed between the two front stoppers 57, also as shown in Fig. 2. The device body 45 is formed with a horizontally and transversally extending groove 61 (vertical direction in Fig. 2). Further, two side stoppers 63F and 63B are slidably engaged in this groove 61, respectively on each end thereof.

Owing to the construction as described above, the position of works W stacked on the device body 45 are determined in both directions of the coordinate axis by the two front stoppers 57 and the two side stoppers 63F and 63B respectively, and in addition the corresponding work end thereof is separated by the magnetic separator 59, respectively.

The operation sequences of taking out one by one the works W stacked on the device body 45, of clamping the taken-up work by the robot 5, of transfering and unloading the clamped work W to the bending machine, of further clamping the work bent by the press brake 1, and of dropping the conveyed work into the product accommodating box 25 will be described hereinbelow.

First, the magnet separator 59 is activated to separate the first or upper work W from the second or following lower work W. Afterwards the suction pads 55 are lowered to suck the first separated work W. Then ,the suction pads 55 which suck the first work W are moved upward together with the first work W to a position corresponding to the uppermost end position of the suction arm member 53. Then, the robot 5 is manipulated under 5-axis control in order to clamp the work W by the work hand 43. At the same time, the suction pads 55 are released from the work W, so that the work W is held only by the work hand 43.

Further, the robot 5 is manipulated under the 5-axis control to transfer the work W clamped by the work hand 43 to the press brake 1 where it is released in a predetermined position. The press brake 1 bends the supplied work W into a determined bending shape. By manipulating the robot 5 again, the work W bent by the press brake 1 is clamped again by the work hand 43 of the robot 5 and further conveyed over the product accommodating box 25. At this position, the bent work W is unclamped by the work hand 43 and dropped into the product accommodating box 25.

By operating the single-work taking-up device 7 and the robot 5 under the 5-axis control, it is possible to supply the stacked works W to the press brake 1 one by one and further to convey the bent works W automatically out from said press brake 1 to the product accommodating box 25.

Since the axis control of robot 5 is reduced by one-axis from the conventional 6-axis control to a 5-axis control, it is possible to economize the program preparation time and the teaching time, so that the setup time of the bending processing can be reduced. In addition, it is also possible to manufacture the work loading and unloading device 3 at a lower cost, as compared with the conventional device.

Further, since the work loading and unloading device 3 can be moved to any position without being limited to only one position in front of the press brake 1, it is possible to use the device 3 by positioning it in front of any convenient press brake 1 and further to move the device 3 to any appropriate storage place.

When a small-sized work W is to be bent, the work hand 43 is replaced by another work hand whose dimensions are adapted to the work dimensions. Further, before the work is bent by the press brake 1, the work W is unclamped from the work hand 43. After the work W has been bent, the bent work W is clamped again by the work hand 43 and then conveyed out of the press brake 1.

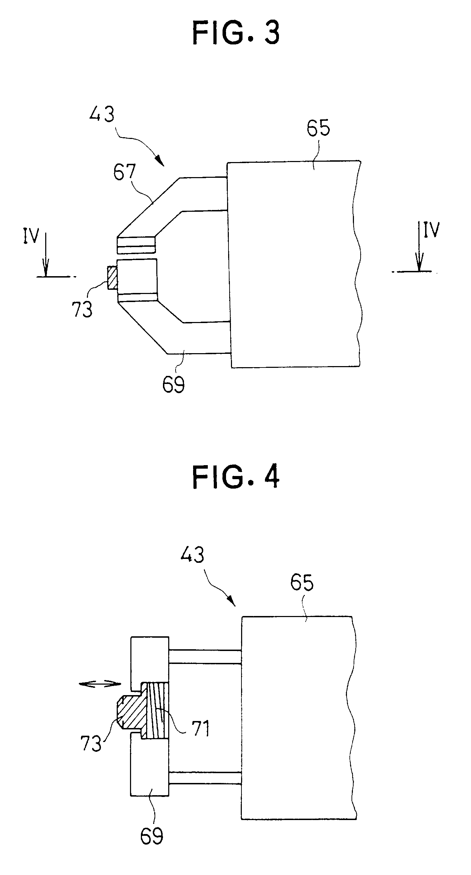

With reference to Figs. 3 and 4, the work hand 43 will be described in further detail hereinbelow. The work hand 43 is provided with a work hand body 65 in front of which are arranged an upper hand 67 and a lower hand 69. Further, a work push member 73 is disposed on the lower hand 69 and can be urged outward and away from the work hand body 65 by a spring 71.

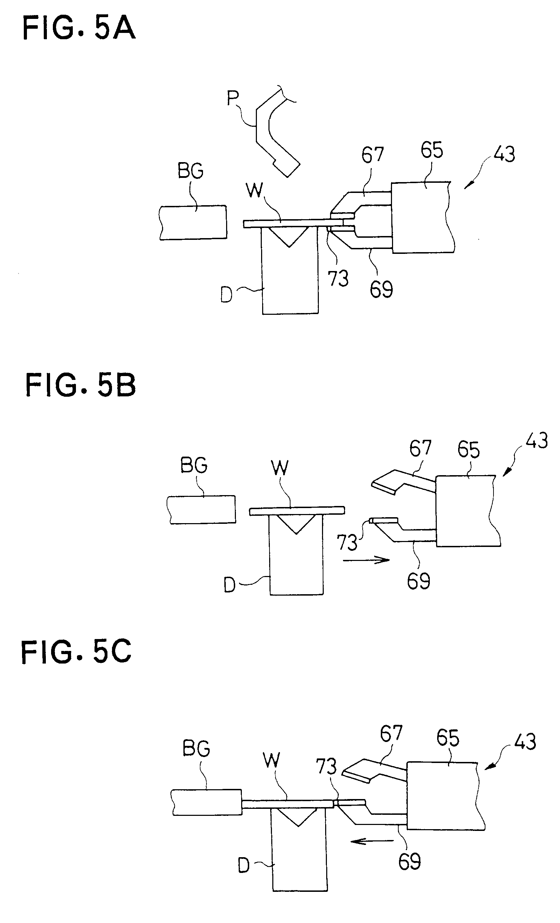

When a work W is to be bent with the help of a punch P and a die D, the work W must be first brought into contact with a back gage BG located on the backside of the punch P. As shown in Fig. 5A, the work W clamped between the upper hand 67 and the lower hand 69 of the work hand 43 is supplied to or mounted onto die D. After that, as show in Fig. 5B, the work W is unclamped by opening the upper and lower hands 67 and 69, and work hand 43 is moved away from the work W (see arrow in Fig. 5B). After that, as shown in Fig. 5C, the work W is pushed slightly rearward (towards the right; see arrow in Fig. 5C) against the back gage BG by moving the work hand 43 again. In this case, the end surface of the work W is pushed against the back gage BG by the work push member 73 provided at the rear end of the lower hand 69. In this case, it is possible to bring the work W accurately in contact with the back gage BG thanks to the elastic function of the spring 71. In addition, it is possible to bring the work W into contact with the back gage BG without any contact occurring between the work hand 43 and the die D.

Although the work push member 73 is provided at the free end of the lower hand 69, it is possible to obtain the same effect by providing the work push member 73 at the free end of the upper hand 67.

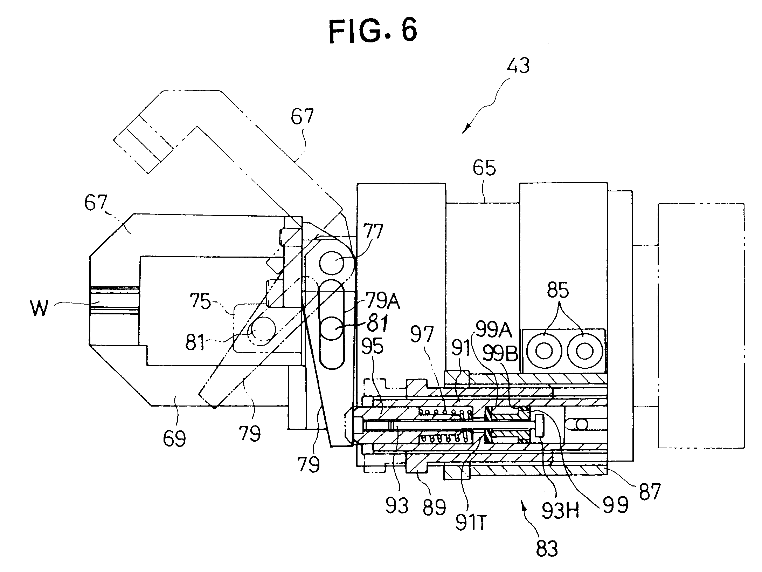

Fig. 6 shows another embodiment of the work hand 43 of the present invention, in which the same reference numerals have been retained for similar parts or elements which have the same functions as the ones of the embodiment shown in Fig. 3. In the embodiment shown in Fig. 6, a hydraulic cylinder (not shown) is provided within the work hand body 65. The end of a piston rod 75 fitted into this hydraulic cylinder projects toward the left side and away from the work hand body 65 in Fig. 6, before clamping the work W. On the upper left side of the work hand body 65 in Fig. 6, an upper hand 67 and an arm member 79 formed integral with the upper hand 67 are pivotally supported by a horizontal pin 77. The arm member 79 is formed with a slot 79A at roughly a middle portion thereof and is connected to the end of the piston rod 75 via another pin 81 engaged in slot 79A of the arm member 79.

When the hydraulic cylinder provided within the work hand body 65 is actuated so that its piston rod 75 positioned as shown by dash-dotted lines in Fig. 6 is retracted towards the right side, pin 81 is also moved rightwards. Accordingly, the upper hand 67 and the arm member 79 are both pivoted in the counterclockwise direction about the pin 77, so that the work W can be clamped between the upper hand 67 and the fixed lower hand 69. In addition, the pivoted lower arm member 79 actuates a double-work take-up detecting device 83 as described below in further detail.

The double-work take-up detecting device 83 is mounted within the work hand body 65 and comprises a detection body 87 fixed onto the work hand body 65 with the help of a plurality of bolts 85. A sleeve 89 is screwed into this detection body 87 and a hollow cylindrical member 91 is screwed into this sleeve 89.

Within this hollow cylindrical member 91, a tubular contact member 99 is provided on the right side of an inner annular shoulder 91T of the hollow cylindrical member 91. The contact member 99 is insulated from the hollow cylindrical member 91 by use of an annular disk-shaped insulating washer 99A interposed between its annular shoulder 91T and the left end surface of the tubular contact member 99 and further by use of an insulting ring 99B interposed between the inner circumferential surface of the hollow cylindrical member 91 and the outer circumferential surface of the annular shoulder of the tubular contact member 99. On the other side of the inwardly projecting shoulder 91T of the hollow cylindrical portion 91, a movable piston member 95 is slidably mounted within the hollow cylindrical member 91 and a spring 97 is interposed between said movable piston member 95 and the inner shoulder 91T of the hollow cylindrical member 91 so as the movable piston member 95 is always urged outwards of the member 91 and towards the left side (in Fig 6) and the arm member 79. Further, an adjusting bolt 93 is formed with a head 93H on the outmost right end thereof and with a shaft extending on both sides of inner shoulder 91T inside the hollow cylindrical member 91. The shaft of the adjusting bolt 93 is pressure-fitted to the movable member 95 and passes freely through the central through hole of the contact member 99, as shown in Fig. 6. Therefore, the tubular contact member 99 and the adjusting bolt 93 constitute a detection switch. When only one work W is clamped between hands 67,69, the adjusting bolt 93 is positioned as shown in Fig. 6 and its head 93H is kept away from the right end surface of the contact member 99, so that the detection switch is kept off. However, when two or more works W are clamped by the two hands 67,69, the adjusting bolt 93 is moved toward the left side and the head 93H is brought into contact with the contact member 99 so that the detection switch is turned on.

Thanks to the above-mentioned construction, and provided that a single work W is correctly clamped between the upper hand 67 and the lower hand 69 as shown in Fig. 6, the head 93H of the adjusting bolt 93 is kept away (turned off) from the contact member 99. This position is adjusted according to the thickness of the works W by moving the adjusting bolt 93 with respect to the movable piston member 95 in the right or left direction, so as to obtain a setup status position as shown in full lines in Fig. 6.

When the double-work take-up detecting device 83 is adjusted as described above, and when a single work W is correctly clamped between the upper hand 67 and the lower hand 69, the arm member 79 is simultaneously pivoted counterclockwise in Fig. 6, so that the movable piston member 95 is pushed toward the right side and into the hollow cylindrical member 91, whereby the adjusting bolt 93 is pushed and kept away from the contact member 99 to turn off the detection switch. Thanks to this arrangement, it is possible to detect the single work clamping.

On the other hand, when two works W are erroneously clamped between the upper hand 67 and the lower hand 69, the arm member 79 is not sufficiently pivoted counterclockwise and cannot reach the position as shown in full lines in Fig. 6. Consequently, the movable piston member 95 cannot move towards the right side, but is moved towards the left side under the action of the spring 97, so that the adjusting bolt 93 is also moved towards the left side together with the movable member 95 and that the head 93H of the adjusting bolt 93 is brought into contact with the contact member 99 to turn on the detection switch. As a result thereof, it is possible to detect the double work clamping. In this connection, it should be noted that when no work is clamped between the upper hand 67 and the lower hand 69, the arm member 79 can also be pivoted further in the counterclockwise direction. In order to keep the detection switch turned off under these conditions, the arm member 79 can be kept in an appropriate position by a stopper (not shown).

Although the detection switch is turned on whenever two works are erroneously clamped, it is of course possible to construct the detecting device 83 in such a way that the detection switch is turned off whenever two works are clamped erroneously.

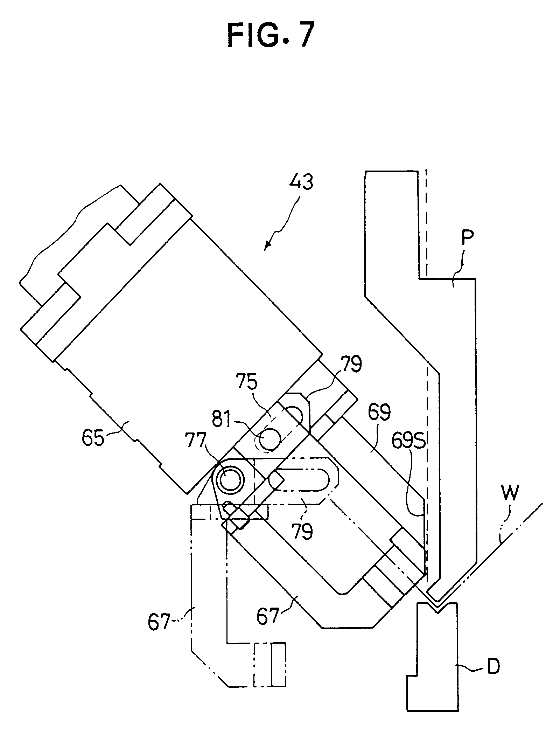

Fig. 7 shows another embodiment of the work hand 43, in which the same reference numerals have been retained for the similar parts or elements which have the same functions as those described in connection with Fig. 6, and without repeating any detailed description thereof. In this embodiment, the work hand 43 is not provided with the double-work take-up detection device 83. When the work W already bent by the punch P and die D is to be clamped by the work hand 43 of the embodiment, as shown in Fig. 7, a vertical surface 69S of the fixed upper hand 69 which is inclined for example at 45 degrees, is brought near the punch P and then the pivotable lower hand 67 is pivoted for clamping the bent work W between both the hands 67 and 69. It should be noted that in this embodiment, the fixed hand 69 is positioned above the pivotable hand 67. Thanks to the above mentioned arrangement, it is possible to prevent interference of the work hand 43 with the punch P. This embodiment is particularly advantageous for clamping a short bent work W without interference with the punch P and the die D.

Since the 5-axis control robot provided with a work hand is used in the work loading and unloading device for a bending machine according to the present invention, it is possible to automatically supply the work and convey the bent work in spite of a short program preparation and teaching (setup) time, thus reducing the production cost of the bending processing.

Since the work loading and unloading device is movable, it is possible to use the device at any desired positions without fixing the device in front of only a specific bending machine. Further, it is also possible to move the device into a storage place when not used.

Since, in the work hand according to the present invention, either one of the upper and lower hands is provided with a work push member, it is possible to securely bring the work into contact with the back gage of the bending machine without any interference with the die.

As the upper or lower hand is pivoted towards the lower or upper hand and as the double-work take-up detection device is attached to the work hand, it is possible to detect the abnormal cases where two works are clamped erroneously by the work hand.

As the work hand is composed of a fixed hand and a pivotal hand, it is possible to clamp even a short bent work without interference with the punch P on the die D.

The described embodiments can be modified within the scope of protection as defined in the annexed claims.

## Claims

1. A work loading and unloading device for a bending machine comprising a five-axis control robot (5) provided with a work hand (43) having a work hand body (65) and at least a first hand (67) pivotably supported on said work hand (43) adapted for loading work (W) to the bending machine and unloading a bent work from said bending machine, a product accommodating box (25) and a single work take up device (7), characterised in that the single work taking up device (7), the product accommodating box (25) and the five-axis robot (5) are fixed on the same movable base (9), said base (9) being provided with a plurality of rotable wheels (13).

2. A work loading and unloading device according to claim 1, wherein this device further comprises:
a plurality of centering heads (15) disposed below and at roughly a middle portion of base (9); and
a plurality of centering blocks (23) installed on a floor in front of the bending machine (1) and provided with centering holes into which said centering heads (15) are engageable so as to position the work loading and unloading device in front of a bending machine.

3. A work loading and unloading device according to claim 1, wherein the single work taking up device (7) comprises:
a device body (45);
a vertical cylinder (49) having a vertical piston rod (51);
a horizontal suction arm member (53) having one of its ends attached to the top of said vertical piston rod (51); and
a plurality of suction pads (55) provided on the lower face of said suction arm member (53) for sucking up only a single work from stacked works (W).

4. A work loading and unloading device for a bending machine according to claim 3, wherein the single work taking up device (7) further comprises, on the device body (45):
two front stoppers (57), placed so as to oppose each other, for detecting the horizontal positions of the work ends of the stocks works W;
a horizontally and transversally extending groove (61);
a magnet separator (59) for separating the work ends interposed between the two front stoppers (57); and
two side stoppers (63F) and (63B) slidably engaged on each side of the groove (61).

5. A work loading and unloading device for a bending machine according to claim 1, wherein the work hand (43) is provided with a double work take-up detecting device (83) attached to said work hand body (65) for detecting whether two works (W) are clamped simultaneously between a second hand (69) and said first pivotable hand (67), said detecting device (83) co-operating with the pivotable hand (67) thereof.

6. A work loading and unloading device for a bending machine according to claim 1, wherein the free end of said at least one hand (67) is provided with a work-push member (73) that can be urged outward and away from the work-hand body (65) by a spring (71).

7. A work loading and unloading device for a bending machine according to claim 5, wherein said double work take up detecting device (83) comprises:
a hollow cylindrical member (91) attached to a work hand body (65) of the work hand (43);
a contact member (99) disposed within and insulated from said hollow cylindrical member;
a movable piston member (95) disposed within said hollow cylindrical member (91) on one side of and remote from said contact member (99);
a spring (97) disposed within said hollow cylindrical member (91) so as to urge said moving piston member (95) outward from said hollow cylindrical member; and
an adjusting bolt (93) having a head (93H) and a shaft loosely passed through said contact member and fitted to said movable piston member; said head (93H) co-operating with said contact member (99) so as to constitute a detection switch operated by an arm member (79) of the pivotable hand (67) of said work hand (43).

8. A work loading and unloading device for a bending machine according to claim 7, wherein the work-hand body (65) comprises:
a piston rod (75) fitted into a hydraulic cylinder provided within the work-hand body (65); and
an upper pivotable hand (67) and an arm member (79), integrally formed with said pivotable upper hand (67), are pivotally supported by an horizontal pin (77), said arm member (79) being formed with a slot (79A) into which is engaged a pin (81) connected to the end of the piston rod (75).

9. A work loading and unloading device for a bending machine according to claim 7, wherein the upper hand (69) is fixed, is inclined at 45 degrees and is positioned above the pivotable hand (67) and has a vertical surface (69S) so as to be able to be brought near the punch (P).

## Patentansprüche

1. Eine Vorrichtung zur Einlagerung und Entnahme für eine Biegepresse, die einen fünfachsigen Steuerroboter (5), der mit einer Arbeitshand (43) versehen ist, die einen Arbeitshandkörper (65) und wenigstens eine erste Hand (67) aufweist, die verschwenkbar an der genannten Arbeitshand (43) gehalten ist und zur Einlagerung eines Werkstücks (W) in die Biegepresse und zur Entnahme eines gebogenen Werkstücks aus der genannten Biegepresse geeignet ist, einen Erzeugnisaufnahmebehälter (25) und eine Aufnahmevorrichtung (7) für ein einzelnes Werkstück umfaßt, **dadurch gekennzeichnet,** daß die Aufnahmevorrichtung (7) für ein einzelnes Werkstück, der Erzeugnisaufnahmebehälter (25) und der fünfachsige Roboter (5) auf der selben bewegbaren Grundplatte (9) befestigt sind, wobei die genannte Grundplatte (9) mit einer Mehrzahl drehbarer Räder (13) versehen ist.

2. Eine Vorrichtung zur Einlagerung und Entnahme gemäß Anspruch 1, wobei diese Vorrichtung des weiteren umfaßt:
eine Mehrzahl Zentrierungsköpfe (15), die unterhalb und grob in einem mittleren Abschnitt der Grundplatte (9) angeordnet sind; und
eine Mehrzahl Zentrierungsblöcke (23), die auf einem Boden vor der Biegepresse (1) montiert und mit Zentrierungslöchern versehen sind, in die die genannten Zentrierungsköpfe (15) eingreifbar sind, um die Vorrichtung zur Einlagerung und Entnahme eines Werkstücks vor einer Biegepresse zu positionieren.

3. Eine Vorrichtung zur Einlagerung und Entnahme gemaß Anspruch 1, wobei die Aufnahmevorrichtung (7) für ein einzelnes Werkstück umfaßt:
einen Vorrichtungskörper (45);
einen vertikalen Zylinder (49( mit einer vertikalen Kolbenstange (51);
ein horizontales Ansaugarmteil (53), wobei eines seiner Enden an dem oberen Ende der genannten vertikalen Kolbenstange (51) befestigt ist; und
eine Mehrzahl Ansaugkissen (55), die an der Unterseite des genannten Ansaugarmteils (53) vorgesehen sind, um nur ein einziges Werkstück von gestapelten Werkstücken (W) anzusaugen.

4. Eine Vorrichtung zur Einlagerung und Entnahme für eine Biegepresse gemäß Anspruch 3, wobei die Aufnahmevorrichtung (7) für ein einzelnes Werkstück des weiteren auf dem Vorrichtungskörper (45) umfaßt:
zwei vordere Anschläge (57), die so angeordnet sind, daß sie einander gegenüberstehen, um die horizontalen Positionen der Werkstückenden des Werkstückvorrats (W) zu erfassen;
eine sich horizontal und quer erstreckende Nut (61);
eine magnetische Trenneinrichtung (59), um die Werkstückenden zu trennen, die zwischen die zwei vorderen Anschläge (57) eingefügt sind; und
zwei Seitenanschläge (63F) und (63B), die verschiebbar auf jeder Seite der Nut (61) eingreifen.

5. Eine Vorrichtung zur Einlagerung und Entnahme für eine Biegepresse gemäß Anspruch 1, wobei die Arbeitshand (43) mit einer doppelten Werkstückaufnahmeerfassungseinrichtung (83) versehen ist, die an dem genannten Arbeitshandkörper (65) angebracht ist, um zu erfassen, ob zwei Werkstücke (W) gleichzeitig zwischen einer zweiten Hand (69) und der genannten ersten, verschwenkbaren Hand (67) eingeklemmt sind, wobei die genannte Erfassungseinrichtung (83) mit der verschwenkbaren Hand (67) davon zusammenarbeitet.

6. Eine Vorrichtung zur Einlagerung und Entnahme für eine Biegepresse gemäß Anspruch 1, wobei das freie Ende der genannten wenigstens einen Hand (67) mit einem Arbeitsstückdrückteil (73) versehen ist, das nach außen und von dem Arbeitshandkörper (65) fort durch eine Feder (71) gedrückt werden kann.

7. Eine Vorrichtung zur Einlagerung und Entnahme eines Werkstücks für eine Biegepresse, gemäß Anspruch 5, wobei die genannte doppelte Werkstückaufnahmeerfassungseinrichtung (83) umfaßt:
ein hohes, zylindrisches Teil (91), das an einem Arbeitshandkörper (65) der Arbeitshand (43) befestigt ist;
ein Berührungsteil (99), das innerhalb des genannten hohlen, zylindrischen Elements und von ihm isoliert angeordnet ist;
ein bewegbares Kolbenteil (95), das innerhalb des genannten hohlen, zylindrischen Teils (91) auf einer Seite und von dem Berührungsteil (99) entfernt angeordnet ist;
eine Feder (97), die innerhalb des genannten hohlen, zylindrischen Teils (91) angeordnet ist, damit das genannte sich bewegende Kolbenteil (95) nach außerhalb des genannten hohen, zylindrischen Teils gedrückt wird; und
einen Einstellbolzen (93) mit einem Kopf (93H) und einem Schaft, der lose durch das genannte Berührungsteil hindurchgeht und an dem genannten bewegbaren, Kolbenteil befestigt ist; wobei der genannte Kopf (93H) mit dem genannten Berührungsteil (99) zusammenwirkt, um einen Erfassungsschalter zu bilden, der von einem Armteil (79) der verschwenkbaren Hand (67) der genannten Arbeitshand (43) betätigt wird.

8. Eine Vorrichtung zur Einlagerung und Entnahme eines Werkstücks für eine Biegepresse gemäß Anspruch 7, wobei der Arbeitshandkörper (65) umfaßt:
eine Kolbenstange (75), die in einen hydraulischen Zylinder eingepaßt ist, der in dem Arbeitshandkörper (65) vorgesehen ist; und
eine obere, verschwenkbare Hand (67) und ein Armteil (79), das einstückig mit der genannten verschwenkbaren, oberen Hand (67) gebildet ist, sind verschwenkbar von einem horizontalen Stift (77) gehalten, wobei das genannte Armteil (79) mit einem Schlitz (79A) gebildet ist, in den ein Stift (81) eingreift, der mit dem Ende der Kolbenstange (75) verbunden ist.

9. Eine Vorrichtung zur Einlagerung und Entnahme eines Werkstücks für eine Biegepresse gemäß Anspruch 7, wobei die obere Hand (69) befestigt ist, unter 45 Grad geneigt ist und oberhalb der verschwenkbaren Hand (67) angeordnet ist und eine vertikale Oberfläche (69S) aufweist, so daß sie der Stanze (P) nahe gebracht werden kann.

## Revendications

1. Dispositif de chargement et de déchargement de pièce pour une machine à cintrer comportant un robot de commande à cinq axes (5) pourvu d'une main de pièce (43) ayant un corps de main de pièce (65) et au moins une première main (67) supportée de façon pivotante sur ladite main de pièce (43) et prévue pour charger une pièce (W) sur la machine à cintrer et décharger une pièce cintrée de ladite machine à cintrer, une caisse de réception de produit (25) et un unique dispositif de réception de pièce (7), caractérisé en ce que l'unique dispositif de réception de pièce (7), la caisse de réception de produit (25) et le robot à cinq axes (5) sont fixés sur la même base mobile (9), ladite base (9) étant pourvue de plusieurs roues rotatives (13).

2. Dispositif de chargement et de déchargement de pièce selon la revendication 1, dans lequel ce dispositif comporte en outre :
plusieurs têtes de centrage (15) disposées sous et à peu près au niveau d'une partie médiane de la base (9); et
plusieurs blocs de centrage (23) installés sur le sol devant la machine à cintrer (1) et pourvus de trous de centrage dans lesquels lesdites têtes de centrage (15) peuvent être engagées de façon à positionner le dispositif de chargement et de déchargement de pièce devant une machine à cintrer.

3. Dispositif de chargement et de déchargement de pièce selon la revendication 1, dans lequel l'unique dispositif de réception de pièce (7) comporte:
un corps de dispositif (45);
un vérin vertical (49) ayant une tige de piston verticale (51);
un élément horizontal de bras d'aspiration (53) ayant une de ses extrémités fixée sur le dessus de ladite tige de piston verticale (51); et
plusieurs ventouses (55) prévues sur la face inférieure dudit élément de bras d'aspiration (53) afin d'aspirer une seule pièce parmi des pièces empilées (W).

4. Dispositif de chargement et de déchargement de pièce pour une machine à cintrer selon la revendication 3, dans lequel l'unique dispositif de réception de pièce (7) comporte en outre, sur le corps de dispositif (45) :
deux butées avant (57), placées afin de se faire face, destinées à détecter les positions horizontales des extrémités de pièce des pièces en stock W;
une rainure s'étendant horizontalement et transversalement (61);
un séparateur à aimant (59) destiné à séparer les extrémités de pièce interposées entre les deux butées avant (57); et
deux butées latérales (63F) et (63B) engagées de façon coulissante de chaque côté de la rainure (61).

5. Dispositif de chargement et de déchargement de pièce pour une machine à cintrer selon la revendication 1, dans lequel la main de pièce (43) est équipée d'un dispositif de détection de saisie de pièce double (83) fixé sur ledit corps de main de pièce (65) afin de détecter si deux pièces (W) sont serrées simultanément entre une deuxième main (69) et ladite première main pivotante (67), ledit dispositif de détection (83) coopérant avec la main pivotante (67).

6. Dispositif de chargement et de déchargement de pièce pour une machine à cintrer selon la revendication 1, dans lequel l'extrémité libre de ladite au moins une main (67) est pourvue d'un élément de poussée de pièce (73) qui peut être poussé vers l'extérieur et à l'écart du corps de main de pièce (65) par un ressort (71).

7. Dispositif de chargement et de déchargement de pièce pour une machine à cintrer selon la revendication 5, dans lequel ledit dispositif de détection de saisie de pièce double (83) comporte :
un élément cylindrique creux (91) fixé sur un corps de main de pièce (65) de la main de pièce (43);
un élément de contact (99) disposé à l'intérieur de et isolé dudit élément cylindrique creux;
un élément mobile de piston (95) disposé à l'intérieur dudit élément cylindrique creux (91) sur un côté de et éloigné dudit élément de contact (99);
un ressort (97) disposé à l'intérieur dudit élément cylindrique creux (91) de façon à pousser ledit élément mobile de piston (95) à l'extérieur dudit élément cylindrique creux; et
un boulon de réglage (93) ayant une tête (93H) et un axe passé librement à travers ledit élément de contact et monté sur ledit élément mobile de piston; ladite tête (93H) coopérant avec ledit élément de contact (99) afin de constituer un commutateur de détection actionné par un élément de bras (79) de la main pivotante (67) de ladite main de pièce (43).

8. Dispositif de chargement et de déchargement de pièce pour une machine à cintrer selon la revendication 7, dans lequel le corps de main de pièce (65) comporte :
une tige de piston (75) montée dans un vérin hydraulique prévu à l'intérieur du corps de main de pièce (65); et
une main pivotante supérieure (67) et un élément de bras (79), formé d'un seul tenant avec ladite main supérieure pivotante (67), sont supportés de façon pivotante par un axe horizontal (77), ledit élément de bras (79) étant formé avec une fente (79A) dans laquelle est engagé un axe (81) relié à l'extrémité de la tige de piston (75).

9. Dispositif de chargement et de déchargement de pièce pour une machine à cintrer selon la revendication 7, dans lequel la main supérieure (69) est fixe, est inclinée à 45 degrés et est placée au-dessus de la main pivotante (67) et a une surface verticale (69S) afin de pouvoir être approchée du poinçon (P).
